**Europäisches Patentamt**

**European Patent Office**

**Office européen des brevets**

(19)

(11) Veröffentlichungsnummer : **0 000 484**

**B1**

(12) **EUROPÄISCHE PATENTSCHRIFT**

(45) Veröffentlichungstag der Patentschrift :
27.05.81

(21) Anmeldenummer : 78100296.9

(22) Anmeldetag : 03.07.78

(51) Int. Cl.³ : **F 28 D   7/00**, **E 04 B   5/48**,
**F 16 L   3/02**

(54) **Einbauelement für Flüssigkeits-Flächenheizungen.**

(30) Priorität : 23.07.77 DE 2733361

(43) Veröffentlichungstag der Anmeldung :
07.02.79 (Patentblatt 79/03)

(45) Bekanntmachung des Hinweises auf die Patenterteilung : 27.05.81 Patentblatt 81/21

(84) Benannte Vertragsstaaten :
**BE CH FR NL SE**

(56) Entgegenhaltungen :
**CH-A-569 235**
**DE-A-1 954 823**
**DE-A-2 319 889**
**DE-A-2 456 836**
**DE-A-2 515 708**
**FR-A-2 134 386**

(73) Patentinhaber : **Hewing, Bernd**
**Hellstiege 10**
**D-4434 Ochtrup (DE)**

**Hagemann, Franz-Josef**
**Eichendorffweg 8**
**D-4434 Ochtrup (DE)**

(72) Erfinder : **Hewing, Bernd**
**Hellstiege 10**
**D-4434 Ochtrup (DE)**
Erfinder : **Hagemann, Franz-Josef**
**Eichendorffweg 8**
**D-4434 Ochtrup (DE)**

(74) Vertreter : **Schulze Horn, Stefan, Dipl.-Ing. et al**
**Goldstrasse 36**
**D-4400 Münster (DE)**

Imprimerie Jouve, 17, rue du Louvre, 75001 Paris, France

Einbauelement für Flüssigkeits-Flächenheizungen

Die Erfindung bezieht sich auf ein aus wärmedämmenden Stoffen, wie Polystyrol-Schaumstoff oder dergleichen vorgefertigtes Einbauelement für Flüssigkeits-Flächenheizungen, auf welchem Heizrohre mittels Haltevorrichtungen mit nach oben offenen Aussparungen zu verlegen und zu befestigen sind.

Aus der DE-A-2 456 836 ist ein Einbauelement der bezeichneten Art bekannt, bei dem stegförmige Haltevorrichtungen verwendet sind, die an ihrer Oberseite Aussparungen mit jeweils gleichem Abstand von den Kanten des Einbauelementes haben. Abstände und Anordnung der Aussparungen sind so gewählt, daß nach dem Verlegen der Einbauelemente die Aussparungen bei einem Einbauelement mit den Aussparungen des benachbarten Einbauelementes fluchten. Die bei der bekannten Vorrichtung auf einem Einbauelement angeordneten Haltevorrichtungen bestehen demnach aus Stegen mit Nuten, in welche die Heizrohre eingelegt werden. Diese Nuten können die Rohre nur in einer bestimmten Richtung aufnehmen.

Demgegenüber liegt der Erfindung zunächst die Aufgabe zugrunde, die Haltevorrichtungen in der Weise auszubilden, daß die Heizrohre in zwei sich kreuzenden Richtungen aufgenommen werden können.

Diese Aufgabe wird auch durch die nach der CH-A 569 235 bekannte Haltevorrichtung gelöst, bei welcher nach oben ragende und drehbar angeordnete Zapfen vorgesehen sind. Diese Halterungen erfordern aber ein spezielles Drehteil, welches verschleißen kann. Damit kann sich der Zusammenhalt zwischen Heizrohr und Unterlage lockern.

Deshalb wird vorliegender Erfindung die Aufgabe zugrunde gelegt, die Haltevorrichtungen dahingehend zu verbessern, daß die Heizrohre in zwei sich kreuzenden Richtungen aufgenommen werden können, wobei auf eine spezielle Drehvorrichtung verzichtet werden soll.

Diese Aufgabe wird bei einem Einbauelement für Flüssigkeits-Flächenheizungen der eingangs genannten Art dadurch gelöst, daß die Haltevorrichtungen als Einzelhaltevorrichtungen aus einer Basis mit einem aufstehenden Kranz bestehen, der mit zwei mal zwei sich gegenüberliegenden Aussparungen versehen ist, wobei zwei um 90° kreuzweise angeordnete Wege für das einzulegende Heizrohr entstehen.

Die Verteilung der Haltevorrichtungen über die Platte erfolgt vorzugsweise in regelmäßigen, gerasterten Abständen und wird in der Beschreibung noch näher erläutert.

Wesentlich für die Erfindung ist die Gestaltung der Haltevorrichtungen, die auf der einen Seite preisgünstig als Kunststoff-Spritzgußteil hergestellt werden sollen, auf der anderen Seite auch bei erheblicher Beanspruchung durch Wärme, Druck und Verschiebungskräfte eine zuverlässige Halterung ergeben sollen. Das Einbauelement gemäß Erfindung besitzt demgemäß Haltevorrichtungen, die vier von der Basis aufragende, rotationssymetrisch verteilte und mit einem gekrümmten, federnden Endteil zum Zentrum der Basis zeigende Finger aufweisen, wobei zwischen jeweils zwei Fingern eine Aussparung angeordnet ist, in der das Heizrohr klemmend gehalten ist.

Bei der Fertigung der Einbauelemente wird die eigentliche Platte vorzugsweise zunächst ohne die Haltevorrichtung angefertigt. Es können Haltevorrichtungen mit einer Basisplatte oder mit einem Basiskranz vorgesehen werden. Entsprechend weist die Oberfläche Vertiefungen zum Einsetzen von Teilen der Haltevorrichtungen auf. Diese Vertiefungen nehmen die Haltevorrichtungen auf, die in ihnen verschweißt, verklebt oder durch kraftschlüssige Verbindung gehalten sind.

Schließlich wird noch vorgeschlagen, daß auf der Oberfläche des Einbauelementes außerhalb des Verlaufs der zu verlegenden Heizrohre Höcker aus dem Material des Elementes aufragen. Diese Höcker haben den Vorteil, daß bei der Montage beispielsweise Laufbretter und dergleichen darauf ruhen können.

Weitere Einzelheiten der Erfindung sind anhand von in der Zeichnung dargestellten Ausführungsbeispielen beschrieben. Die einzelnen Figuren zeigen :

Figur 1a ein Einbauelement gemäß Erfindung in verkleinerter Darstellung, von oben gesehen ;

Figur 1b eine Schnittansicht gemäß Schnitt B ... B in Figur 1a ;

Figur 2a eine andere Ausführungsform des Einbauelementes mit über die Fläche verteilten Höckern ;

Figur 2b eine Schnittansicht gemäß B ... B in Figur 2a ;

Figur 3 ein Ausführungsbeispiel für eine Haltevorrichtung ;

Figur 4 ein weiteres Ausführungsbeispiel für eine Haltevorrichtung in einer anderen Einbettung ;

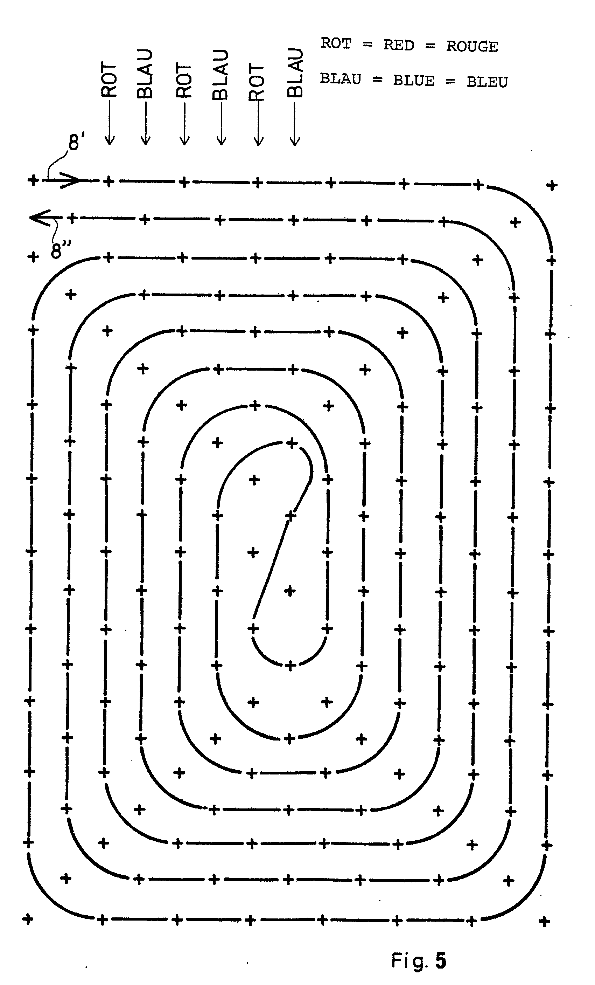

Figur 5 ein Verlegebeispiel mit Vorlauf- und Rücklaufanschluß.

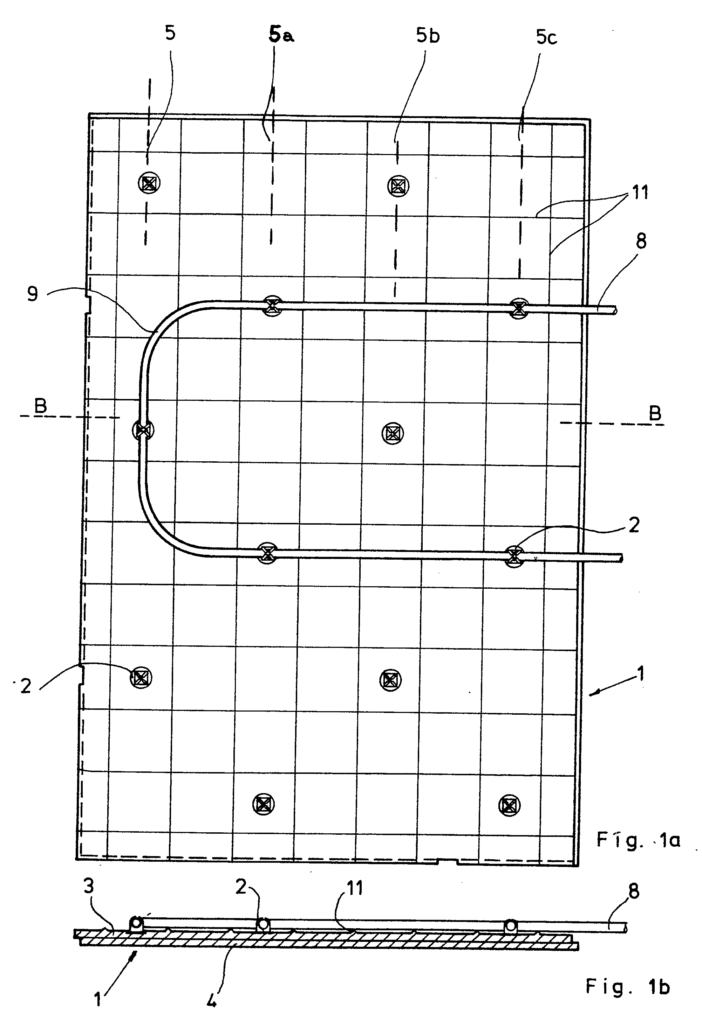

In den Figuren 1a und b ist ein erstes Ausführungsbeispiel eines aus wärmedämmenden Stoffen hergestellten Einbauelementes gemäß der Erfindung dargestellt. Für das Ausführungsbeispiel sind Abmessungen von 100 × 66,7 cm gewählt worden. Das Einbauelement besteht aus einer Platte 1 mit daran befestigten Haltevorrichtungen 2. Wie aus dem Schnittbild der Figur 1b erkennbar ist, besitzt die Platte 1 einen zweischichtigen Aufbau aus einem Polystyrol-Schaumstoff mit zwei verschiedenen Strukturen. Die obere Schicht 3 besteht vorzugsweise aus einer Polystyrol-Wärmeisolierungsmasse, während die untere Schicht 4 eine Wärme- und Trittschallisolierungszone bildet. Die Werte für derartige Polystyrol-Schaumstoffe sind in den DIN-Vorschriften 4 108 bzw. 4 109 definiert. Sie bilden jedoch im vorliegenden Falle nicht den eigentlichen Gegenstand der Erfindung.

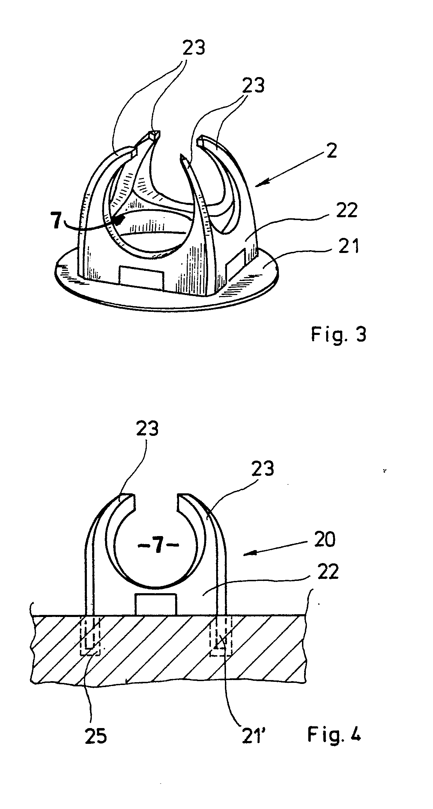

In die obere Schicht 3 sind über die Platte verteilt die Haltevorrichtungen 2 eingebettet. Die Haltevorrichtungen haben die in der Figur 3 dargestellte Gestalt, wobei Abwandlungen möglich sind, die weiter unten beschrieben sind.

Während gemäß dem eingangs genannten Stand der Technik über die gesamte Länge und Breite der Einbauelemente verlaufende Stege mit Aussparungen vorgesehen sind, sind in der hier beschriebenen Ausführungsform die Haltevorrichtungen 2 einzeln punktförmig über die Oberfläche des Einbauelementes verteilt. Sie liegen dabei jeweils zu mehreren hintereinander auf zu den Seiten des Einbauelementes parallelen Geraden (in der Figur 1 Bezugszahlen 5, 5a, 5b, 5c).

Ein Heizrohr 8, vorzugsweise aus einem wärmebeständigen Kunststoff gefertigt, wird in die nach oben offenen Aussparungen der Haltevorrichtung verlegt und ist darin klemmend gehalten. Dabei lassen sich auch ohne weiteres Krümmungen, wie bei 9, bewältigen, indem die Haltevorrichtung gemäß Erfindung im Scheitelpunkt der Krümmung eingesetzt ist.

Die Lage und Dichte der verlegten Heizrohre kann sehr stark variieren, wobei dem Heizungsbauer viele Möglichkeiten der Wärmebedarfsdeckung gegeben sind. Der Verteilung der Haltevorrichtungen auf dem Einbauelement liegt ein Raster zugrunde, dem ein Grundmaß zugrundeliegt, das bei n-facher Verlängerung ein rundes Maß von 1,00 oder 2,00 m ergibt.

Aus den Figuren 1a und b ist ferner zu erkennen, daß zwischen den Haltevorrichtungen parallel zu den Seiten des Einbauelementes verlaufende, über die Oberfläche verteilte Auflagestege 11 für die Heizrohre 8 vorgesehen sind. Diese Auflagestege haben die Aufgabe, die Heizrohre über dem übrigen Niveau der Oberfläche des Elementes zu halten, damit beim Vergießen der Einbauelemente im Estrich dieser die Heizrohre völlig umschließen kann. Hierdurch wird ein hervorragender Wärmekontakt erzeugt.

Der Einbau der erfindungsgemäßen Elemente für Flüssigkeits-Flächenheizungen gestaltet sich wie folgt :

Auf eine vorhandene Betondecke werden die Elemente flächendeckend aufgelegt. Zum Abgleich der bauseits vorhandenen Abmessungen wird entlang der Stege 11 die Platte beschnitten. Dabei ergibt sich der Vorteil, daß die Auflagestege 11 neben den Halterungsaufgaben auch ein visuelles Hilfsmittel für die Aufteilung der Platte bilden. Dem Handwerker «vor Ort» ist damit eine weitere Arbeitserleichterung gegeben. Er hat dabei auch noch den Vorteil, daß ein Schnitt durch die Platte praktisch durch ein homogenes Material geführt werden kann. Sollte ein Schnitt gerade durch eine Haltevorrichtung geführt werden, so kann diese ohne weiteres durch Herausdrehen entfernt werden.

Nach Belegung der Betondecke mit den Elementen werden die Heizrohre auf den Einbauelementen verlegt, indem sie in die noch zu beschreibenden Haltevorrichtungen eingedrückt und von Klemmbacken gehalten werden. Nach Anschließen und Festlegen des Heizrohres kann dann der flüssige Estrich aufgegossen werden, der sich auch unterhalb der Rohre ausbreiten kann. Nach dem Erstarren des Estrichs ist der Fußboden begehbar.

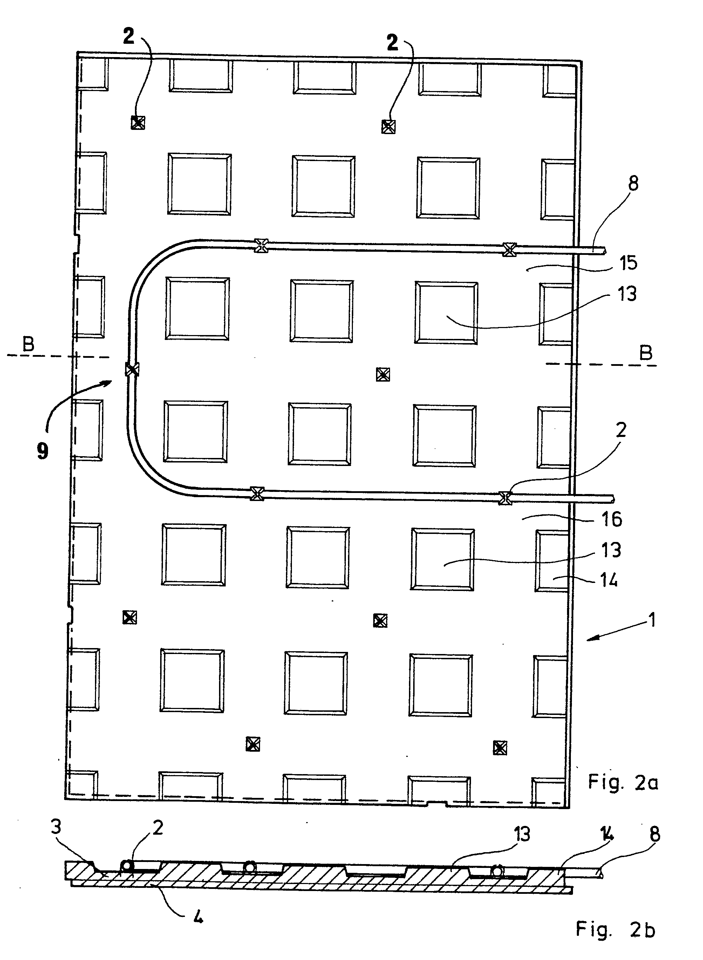

Für die Anwendung im sogenannten Trockenausbau oder im Fertighausbau ist es erforderlich, die Einbauelemente gemäß Erfindung in einer anderen Ausführungsform zu verwenden. Bei diesen Bauten wird auf eine tragende Deckenschicht, beispielsweise aus Beton, eine weitere Fußbodenschicht aufgebracht, die beispielsweise aus einer dünnen Spanplatte mit Teppichbeschichtung besteht. Ein Vergießen mit Estrich ist nicht vorgesehen. Für diesen Fall wird die Ausführungsform gemäß Figur 2a/b eingesetzt. Bei diesem Einbauelement sind über die Fläche verteilt zahlreiche Höcker vorgesehen, die sich in ihrer Größe ebenfalls an das Rastermaß anpassen, wie es auch schon für das Einbauelement gemäß Figur 1 vorgesehen ist. Zahlreiche, quadratische Höcker 13 bzw. halbformatige Höcker 14 liegen so verteilt, daß jeweils freie Gassen 15, 16 offengelassen sind, in denen ein Heizrohr 8 verlegt werden kann. Hierbei sind die gleichen Haltevorrichtungen wie in der Figur 2 vorgesehen. Auf Auflagestege wird dabei selbstverständlich versichtet, da die Heizrohre in diesem Falle möglichst frei von Luft umspült werden, damit es zu einer Wärmeübertragung auf dem darüberliegenden Fußboden kommt.

Figur 2b zeigt die Lage der Heizrohre und die Höhe der Höcker[13]. Es ist erkennbar, daß die flache Oberseite der Höcker etwa auf der Höhe der Scheitel der verlegten Rohre endet.

In den weiteren Figuren 3 und 4 sind Ausführungsbeispiele für die Haltevorrichtungen dargestellt. Allen Haltevorrichtungen 2 bzw. 20 ist gemeinsam, daß sie aus einer Basis 21 (bzw. 21') mit einem aufstehenden Kranz 22 bestehen, in denen wenigstens eine Aussparung 7 zur Befestigung von Heizrohren eingearbeitet ist. Dabei wird nach Figur 3 ein Element gewählt, das aus einem breiten Fußstück besteht, das in Form eines Ringes gebildet ist, von dem nach oben vier Finger 23 ragen, die rotationssymmetrisch über die Basis verteilt sind und mit dem gekrümmten, federnden Endteil, welches zum Zentrum der Basis zeigt, versehen sind. Zwischen den Fingern 23 sind jeweils die Aussparungen aufgespannt.

In diese Aussparungen werden die Heizrohre eingeklemmt. Dabei liegen sich jeweils in Flucht liegende Aussparungegen gegenüber, wobei zwei um 90° kreuzweise angeordnete Wege für das einzulegende Rohr gegeben sind.

Wie aus der Figur 4 erkennbar ist, ist die Basis 21' der Haltevorrichtung in die Polystyrol-Schaumstoffmasse eingebettet, was vorzugsweise direkt beim Ausschäumen der Platte geschieht.

Es hat sich jedoch als nützlich erwiesen, beim Transport und bei der Lagerung der Einbauelemente zunächst auf einem Einbau der Halteelemente zu verzichten. Diese werden erst nachträglich in vorgefertigte Vertiefungen 25 eingesteckt und dort verklebt, wie dies aus der Figur 4 erkennbar ist. Die Halteelemente 20 gemäß Figur 4 bestehen demnach aus einer ähnlichen Fingeranordnung (Bezugszahl 23) wie bei Figur 3, jedoch besteht die Basis aus einem einfachen, zylindrischen Kranz, der in eine entsprechende kreisförmige Vertiefung 25 eingesteckt werden kann. Dabei sind in den gelieferten Platten die Vertiefungen vorhanden. Beim Einbau der Platten werden die Elemente dort eingesteckt. Das hat den weiteren Vorteil, daß beim Einbau des Heizrohres, bei dem nicht alle Haltevorrichtungen benutzt werden, diese erst gar nicht eingebaut werden müssen, so daß sich ein weiterer Verbilligungseffekt ergibt.

Die Auswahl der Materialien für die eigentliche Platte und für die Haltevorrichtungen richtet sich im wesentlichen nach den Erfordernissen der Bauvorschriften. Neben organischen Kunststoffen können auch anorganische, wie Steinwolle oder gepreßte Mineralien als Material verwendet werden. Die Haltevorrichtungen sind vorzugsweise aus Kunststoff hergestellt. Es ist jedoch auch möglich, Haltevorrichtungen gemäß Erfindung aus Metall zu produzieren. Die Verankerung der Heizrohre erfolgt durch Einrasten des Rohres in den Aussparungen, wobei letztere so bemessen sind, daß sie mit ihren Seitenbereichen etwas über die größte Breite des Rohres hinüberreichen. Dabei ist möglich, die Heizrohre einfach in die Aussparungen einzudrücken bzw. einrasten zu lassen. Von dieser Gestaltung kann jedoch auch abgewichen werden, indem die Rohre nur in die Aussparungen eingelegt und anschließend mit Zusatzteilen befestigt werden.

Ein weiterer Vorteil ist, daß die Haltevorrichtungen 2 oder 20 jeweils verschieden eingefärbt werden können. Figur 6 zeigt schematisch eine aus vielen Elementen 1 zusammengesetzte Bedeckung eines Raumes. Dabei ergeben sich jeweils verschiedene Reihen von rot und blau eingefärbten Haltevorrichtungen 2, hier durch Kreuze dargestellt. Die besondere Anordnung in versetzter Form in Form eines regelmäßigen Gitters, bei dem je vier Haltevorrichtungen einer Farbe genau zentrisch zwischen sich eine Haltevorrichtung einer anderen Farbe umfassen, ermöglicht es, daß bei der Auslegung der Verlaufsrohre 8' immer nur rote Haltevorrichtungen und bei den Rücklaufrohren 8" immer nur blaue benutzt werden können. Das erleichtert die Verlegearbeit wesentlich.

## Ansprüche

1. Aus wärmedämmenden Stoffen, wie Polystyrol-Schaumstoff oder dergleichen vorgefertigtes Einbauelement (1) für Flüssigkeits-Flächenheizungen, auf welchem Heizrohre (8) mittels Haltevorrichtungen (2, 20) mit nach oben offenen Aussparungen (7) zu verlegen und befestigen sind, dadurch gekennzeichnet, daß die Haltevorrichtungen (2 ; 20) als Einzelhaltevorrichtungen aus einer Basis (21) mit einem aufstehenden Kranz (22) bestehen, der mit zwei mal zwei sich gegenüberliegenden Aussparungen (7) versehen ist, wobei zwei um 90° kreuzweise angeordnete Wege für das einzulegende Heizrohr (8) entstehen.

2. Einbauelement nach Anspruch 1, dadurch gekennzeichnet, daß die Haltevorrichtungen (2, 20) vier von der Basis (21) aufragende, rotationssymmetrisch verteilte und mit einem gekrümmten, federnden Endteil zum Zentrum der Basis zeigende Finger (23) aufweisen, wobei zwischen jeweils zwei Fingern eine Aussparung (7) angeordnet ist, in der das Heizrohr (8) klemmend gehalten ist.

3. Einbauelement nach Anspruch 1, dadurch gekennzeichnet, daß die Oberfläche des Einbauelementes (1) Vertiefungen (25) zum Einsetzen von Teilen der Haltevorrichtung (20) aufweist.

4. Einbauelement nach Anspruch 1, dadurch gekennzeichnet, daß auf der Oberfläche des Einbauelementes (1) außerhalb des Verlaufes der zu verlegenden Heizrohre Höcker (13, 14) aus dem Material des Elementes aufragen.

## Claims

1. A mounting element (1) prefabricated from heat insulating materials, such as polystyrene foam or the like, for floor heating systems, on which mounting element (1) heating tubes (8) for liquids may be installed and mounted with the aid of holding devices (fixtures) (2, 20) having upwardly opening recesses (7), characterized in that said holding devices (2, 20), in the form of separate holding devices, comprise a base (21) provided with an upwardly protruding rim (22) having two pairs of opposingly disposed recesses (7), whereby a pair of passages intersecting each other under 90° angles, are defined for the heating tube (8) to be inserted into the recesses.

2. The mounting element according to claim 1, characterized in that said holding devices (2, 20) include four fingers (23) projecting upwardly from said base (21), which fingers are distributed or spaced in axially symmetrical fashion and each directed towards the center of said base with a curved, resilient end portion, wherein a pair of said fingers each define between them a recess (7) in which said heating tube (8) is clampingly retained.

3. The mounting element according to claim 1, characterized in that the surface of said mounting element (1) is formed with indentations (25) for inserting parts of said holding device (20).

4. The mounting element according to claim 1, characterized in that the surface of said mounting element (1) is provided with protuberances (13, 14) formed integrally with said mounting element and disposed outwards of the path of extension of said heating tubes to be installed.

## Revendications

1. Elément de montage (1) préfabriqué en matière calorifuge, telle que polystyrol expansé, ou analogue, pour installations de chauffage hydraulique de plafond ou plancher, sur lequel des tubes de chauffage (8) sont susceptibles d'être montés et fixés à l'aide d'organes de fixation (2, 20) pourvus d'évidements (7) ouverts vers le haut, caractérisé en ce que les organes de fixation (2, 20) formant organes de fixation individuels sont constitués par une base (21) munie d'une couronne (22) qui s'étend vers le haut et qui est pourvue de deux paires d'évidements (7) opposés, de manière à définir deux logements croisés pour le tube de chauffage (8) à monter, qui forment entre eux un angle de 90°.

2. Elément de montage selon la revendication 1, caractérisé en ce que les organes de fixation (2, 20) comportent quatre doigts (23) s'étendant vers le haut à partir de la base (21), disposés symétriquement par rapport à un axe de révolution et comprenant une partie terminale incurvée élastique dirigée vers le centre de base, chaque paire de doigts définissant un évidement (7) dans lequel le tube de chauffage (8) est maintenu par coincement.

3. Elément de montage selon la revendication 1, caractérisé en ce que la surface de l'élément (1) comporte des cavités (25) pour le montage des parties intéressées de l'organe de fixation (20).

4. Elément de montage selon la revendication 1, caractérisé en ce que la surface de l'élément (1) comporte, en dehors de la zone de montage des tubes de chauffage (8) à installer, des saillies (13, 14) formées du même matériau que celui qui constitue l'élément de montage.

Fïg. 1a

Fig. 1b

Fig. 2a

Fig. 2b

23

23

2

7

22

21

**Fig. 3**

23

23

−7−

20

22

25

21'

**Fig. 4**

ROT = RED = ROUGE

BLAU = BLUE = BLEU

ROT — BLAU — ROT — BLAU — ROT — BLAU

8'

8"

Fig. 5

4